Europäisches Patentamt

(19) European Patent Office  (11) Publication number: **0 074 629**
Office européen des brevets  **B1**

(12) **EUROPEAN PATENT SPECIFICATION**

(45) Date of publication of patent specification: **10.12.86**  (51) Int. Cl.⁴: **F 16 H 13/08, B 23 Q 5/04, F 02 B 33/44, D 01 H 1/135**

(21) Application number: **82108329.2**

(22) Date of filing:.**09.09.82**

(54) Planetary friction transmission mechanism.

(30) Priority: **14.09.81 JP 145086/81**

(43) Date of publication of application:
**23.03.83 Bulletin 83/12**

(45) Publication of the grant of the patent:
**10.12.86 Bulletin 86/50**

(84) Designated Contracting States:
**CH DE GB LI**

(56) References cited:
**DE-A-2 552 708**
**FR-A-2 481 772**
**GB-A-1 546 434**
**US-A-3 244 026**
**US-A-4 296 648**

(73) Proprietor: **KABUSHIKI KAISHA TOYOTA CHUO KENKYUSHO**
**41-1, Aza Yokomichi Oaza Nagakute Nagakute-cho**
**Aichi-gun Aichi-ken, 480-11 (JP)**

(72) Inventor: **Hasegawa, Junzo**
**47-254, Chaya Kyowa-cho**
**Obu-shi Aichi-ken (JP)**
Inventor: **Kitano, Masao**
**4-381, Aza Umemorisaka Oaza Ueda Tempaku-cho**
**Tempaku-ku Nagoya-shi Aichi-ken (JP)**
Inventor: **Kawabata, Susumu**
**49-501, Aza Mongi Oaza Iwasaki Nisshin-cho**
**Aichi-gun Aichi-ken (JP)**

(74) Representative: **Blumbach Weser Bergen Kramer Zwirner Hoffmann Patentanwälte**
**Radeckestrasse 43**
**D-8000 München 60 (DE)**

Courier Press, Leamington Spa, England.

# Description

The present invention relates to a planetary friction transmission mechanism according to the preamble of claim 1.

In a rotating mechanism for acceleration or deceleration, the r.p.m. of a drive shaft is imparted at a value several times as high as or lower than that of the drive shaft itself to a driven shaft so that the precision and efficiency of the production, output control and so on may be enhanced by driving a rotating member such as a rotary tool or spinning rotor rotatable together with that driven shaft. However, the rotating mechanism of the prior art using a gear mechanism cannot rotate at a superhigh speed but requires a gear of superhigh precision so that its production costs are excessively high and it generates noises. On the other hand, a rotating mechanism using a rolling friction mechanism having steel balls has a problem in that the contact pressures between the steel balls and the inner and outer rings are so excessively high that the driving force and the durability are restricted. On the other hand, if high speed rotations are to be decelerated as in a turbine, in order to reduce the noises and vibrations during the power transmission, there exists a reduction mechanism (GB—A—1 546 434) in which planetary rollers borne in a carrier (integrally connected with an output or first shaft) are fitted between a sun roller (integrally connected with an input or second shaft) and a ring roller thereby to effect the reduction in speed between the second shaft and the first shaft through the frictional rotations of the planetary rollers. In this reduction mechanism, sliding friction is established between the planetary rollers and a carrier bearing such rollers so that wear or seizure is invited in case the lubrication of that sliding frictional portions is insufficient. As a result, the running operation of the mechanism itself may possibly be hampered. The reduction mechanism of the prior art is equipped with an oil supply mechanism in which lubricating oil is supplied from the outer peripheral wall (i.e. through radial passages) toward an axial blind hole of the first shaft communicating with an adjacent axial blind hole of the second shaft. However, that construction requires a considerable oil supplying pressure for overcoming the centrifugal force being effected and a large-sized seal mechanism which is fitted between a rotating portion and a stationary portion. Otherwise, the lubrication would be insufficient to invite a malfunction.

JP—A—55-082 848 describes a lubricated friction speed change gearing in which planetary rollers borne in a carrier which is integrally connected with a first shaft are fitted between a sun roller which is integrally connected with a second shaft and a ring roller. The first shaft encloses the second shaft and the oil is supplied via a blind hole through the second shaft to the planetary rollers. In order to improve the lubrication effect the carrier for the planetary rollers is designed in a special way.

In the rotor type open end fine spinning machine, the productivity can be increased in proportion to the r.p.m. of the spinning rotor. At present, the spinning rotor has its drive shaft connected through a belt to a drive source such that its r.p.m. is equal to or higher than 40,000 r.p.m.. A variety of studies have been conducted so as to increase that r.p.m.. However, a high driving force is required because of the load upon the rotations such as the weight of the spinning rotor itself or the pneumatic resistance thereto.

With this in mind, it is a current practice that the spinning rotor is rotated under a considerably high tension upon the belt. As a result, because of the wear of the drive shaft and the limits to the bearing mechanism, it comes to a difficult stage to improve the present r.p.m..

Thus, there has been developed a single motor system, in which the spinning rotor itself is directly driven by a motor, or a disc system in which a disc roller is interposed between the drive shaft of the spinning rotor and the belt, instead of driving the spinning rotor directly by the belt, so that the belt rotates the disc by which the spinning rotor is rotated. However, the open end spinning machine is equipped with a number of, e.g., 100 to 200 spinning rotors. As a result, the running cost becomes high for the single motor system, and the disc system needs a wider spacing between the spinning rotors, because of the arrangement of the additional disc, so that the number of the spinning rotors to be attached to one machine is decreased, thus inviting obstruction to the increase of productivity for one machine.

In the existing belt system, on the other hand, in order to rotate the spinning rotors at 40,000 to 60,000 r.p.m., the running speed of the belt itself reaches a speed as high as 1,900 to 2,800 m/min., thereby to raise other problems in durability and vibrations of the belt itself. It is an object of the present invention to provide a planetary friction transmission mechanism of the kind defined by the preamble of claim 1 with an oil supply system which overcomes the difficulties described. Even in case of extremely high speeds of the second shaft integrally connected with the sun roller a stable and sufficient lubrication shall be ensured without the necessity of an excessive oil supplying pressure and a large-sized seal mechanism.

The invention is characterized by the features of claim 1. Advantageous embodiments are characterized by the subclaims.

A planetary friction transmission mechanism according to the present invention comprises: a casing; a drive shaft rotatably supported in the casing and communicating with a rotation drive source; a driven shaft rotatably supported in the casing coaxially with the drive shaft and having its one end arranged to face the drive shaft and its other end holding a rotary member; an outer ring fixedly secured to the casing; a plurality of elastic planetary rollers disposed in contact with an inner wall of the outer ring and an outer wall of one of the drive and driven shafts, that portion of one of the drive and driven shafts contacted by the planetary rollers acting as a sun roller; a bearing retainer carrying the planetary rollers, arranged to revolve together with the planetary rollers round the sun roller while the planetary rollers rotate on their own axes, the bearing retainer being connected to the other one of the drive and driven shafts for rotating therewith; the sun roller, the outer ring, the planetary rollers and the bearings retainer forming a friction transmission portion. The drive and driven shafts are formed with axial passages which are made to communicate with an external oil source, for introducing the lubricating oil therethrough and for forcibly feeding the oil from the axial passages toward the radially outward direction thereof to lubricate the friction transmission portion.

In the planetary friction transmission mechanism according to the present invention, the elastic planetary rollers are fitted between an outer ring and one of the drive and driven shafts so that the relative acceleration or deceleration between the drive and driven shafts may be efficiently effected by the frictional rotations of those planetary rollers. The drive and driven shafts are used as the input and output shafts, respectively. The mechanism of the invention gives practically excellent effects, as compared with the conventional mechanism, that the mechanical strength is sufficiently enhanced; the construction and arrangement can be simplified and reduced in size; the contact pressures between each planetary roller and the outer ring or one of the drive and driven shafts can be sufficiently damped to improve the durability; and the noises and vibrations can be remarkably reduced.

In the planetary friction transmission mechanism of the present invention, moreover, especially the lubricating mechanism makes more effeective use of the space in the mechanism, as compared with the prior art. The drive and driven shafts are formed with the axial passages to which the lubricating oil is introduced and from which it is supplied radially outwardly to lubricate the respective supporting portions of the drive and driven shafts and the friction transmission portion. Due to the rotating centrifugal force, there are established such pressure distributions that the pressure is lower in the vicinity of the center of axis of the axial passages but is higher in the vicinity of the walls of the passages. Therefore, the aforementioned portions existing in plurality to be lubricated can be wholly lubricated in an effective and proper manner thereby to enjoy the effects that the formations of lubricant films can be ensured to suppress the wear and seizure. Further, the seal may be simple in the present invention because the lubricating oil is introduced to the center of axis of the axial passages where the pressure is low.

According to the present invention, the rotary member may be a spinning rotor for a rotor type open end fine spinning machine, to which a fiber feed passage communicated with a fiber supply source is opened for feeding fibers and in which a guide tube is disposed on the center axis of rotation of the spinning rotor for leading a yarn to the outside. The fibers to be introduced into the spinning rotor, which is rotated at a high speed together with the driven shaft are collected in the maximum internal diameter portion of the spinning rotor and are partially joined to the trailing end of a seed yarn, which has already been formed, and pulled out through the guide tube so that the collected bundle of fibers are continuously withdrawn and twisted by the high speed rotations of the spinning rotor.

In the planetary friction transmission mechanism thus constructed, the elastic planetary rollers are fitted between the outer ring and the driven shaft and carried by the bearing retainer connected to the drive shaft in an integrally rotatable manner so that the rotational drive from the drive shaft rotating at a low speed is accelerated by the frictional rotations of those planetary rollers thereby to stably, smoothly and efficiently rotate the spinning rotor held by the driven shaft at a high speed. As compared with the spinning rotor rotating mechanism in the conventional spinning machine, the mechanism of the invention can enjoy practically excellent effects that the friction transmission portion has a sufficient mechanical strength; the mechanism can ensure the faster rotations of the spinning rotor with improved durability; and the noises and vibrations are reduced to remarkably low levels.

Since the driven shaft is accelerated by the frictional rotations of the elastic planetary rollers, the drive shaft may be rotated at a relatively low speed. Thus, sufficiency can be retained even if the load upon the rotations is invited by the weight of the spinning rotor, the pneumatic resistance to the same and so on or if the driving force is low. Moreover, even if the running speed of the belt for rotating the drive shaft is low, the spinning rotor can be rotated at a high speed so that the tension upon the belt may be low, whereby the durability of the belt itself can be improved while suppressing the generation of belt vibrations. Since the friction transmission portion of the mechanism of the present invention is smaller in diameter than a spinning rotor, the rotor type open end fine spinning machine provided with this mechanism will not be increased in diameter, as compared with the conventional spinning rotor driving mechanism having a spinning rotor of the same diameter but without the friction transmission portion. Accordingly, a plurality of spinning rotor rotating mechanisms can be sufficiently arranged at a small spacing inbetween when they are juxtaposed to one another. As has been described hereinabove, the mechanism of the present invention can enjoy a practically excellent effect that the fine spinning productivity can be enhanced to a far higher level than the prior art.

The planetary friction transmission mechanism thus constructed according to the present invention when applied to the rotor type open end fine spinning machine has further advantages that the effective and proper lubrications of the portions to be lubricated prevents wear and also prevents seizure by cooling down the hot frictional portions, thus enabling the spinning rotor to rotate at an extremely high speed for a prolonged period of time.

Brief Description of the Drawings

Fig. 1 and 2 are longitudinal and transverse sections respectively showing the mechanism according to the first embodiment of the present invention;

Fig. 3 is a longitudinal section showing the mechanism according to the second embodiment of the present invention; and

Figs. 4 to 6 are a longitudinal section, a schematic view and a transverse section, respectively showing the mechanism according to the third embodiment of the present invention.

Detailed Description of the Preferred Embodiments

The present invention will now be described in connection with various embodiments thereof.

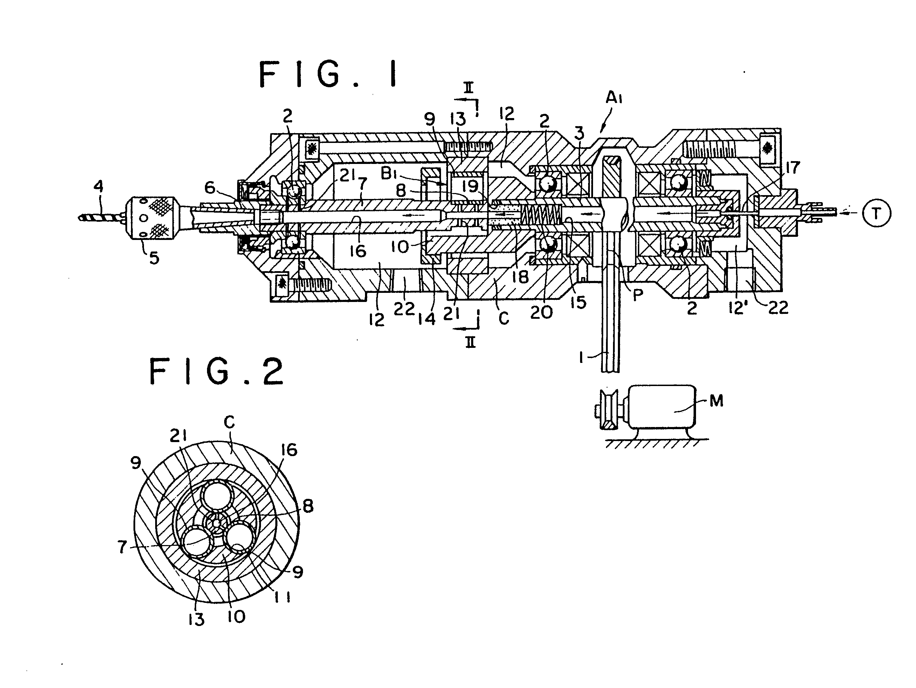

Fig. 1 and 2 show a first embodiment, in which a drilling machine has its main spindle equipped with a planetary friction transmission mechanism A1 as an accelerating rotational mechanism so that an r.p.m. several times as high as that of the main spindle may be imparted to a drill during the drilling operation thereby to improve the working efficiency and precision.

The mechanism of the present first embodiment is equipped with a drive shaft 3 which rotationally communicates with a motor M as a rotational drive source through a V-belt 1 and a pulley P and which has both ends thereof so supported in rolling bearings 2 that they can rotate relative to a stationary casing C. There is provided coaxially with that drive shaft 3 a driven shaft 7 which has its one end arranged to face the drive shaft 3 and its other end equipped with a chuck holder 6 for holding such a chuck 5 as chucks a drill 4 acting as a rotary member and which is so supported in the other rolling bearing 2 that it can rotate relative to the aforementioned stationary casing C. In contact with the driven shaft, there are equidistantly arranged three elastic planetary rollers 9 which are made of metal into a hollow cylindrical shape and which are so fitted in an annular groove 8 formed in the driven shaft 7 that they can revolve round that shaft. The elastic planetary rollers 9 have their outer circumferences borne in the pocketing faces 11 of a carrier 10 acting as a bearing retainer such that they can revolve round the driven shaft 7 together with the carrier 10. Those elastic planetary rollers 9 are so arranged that they are preloaded in the radial directions. Moreover, the carrier 10 has its one end connected to the aforementioned drive shaft 3 in an integrally rotatable manner so that the rotations of the drive shaft 3 are transmitted to the carrier 10 whereby the planetary rollers 9 can revolve round the driven shaft 7 and rotate on their respective axes. In a recess 12 of the stationary casing C, moreover, there is integrally fixed an outer ring 13 which contacts internally with the planetary rollers 9 which have portions protruding from the pocketing faces 11 of the carrier 10. To the other end of the carrier 10, on the other hand, there is integrally fixed a carrier ring 14 which acts against the centrifugal forces exerted upon the aforementioned planetary rollers 9 and the carrier 10. In the mechanism of the first embodiment, those planetary rollers 9, carrier 10, driven shaft 7 and outer ring 13 are so arranged as to effect the friction transmission thereby to construct together a friction transmission portion B1. That portion of the driven shaft 7 contacted by the planetary rollers 9 acts as a sun roller. Furthermore, the drive shaft 3 and the driven shaft 7 are respectively formed with axial bores which are used as oil feed passages 15 and 16. The portion of the driven shaft 7 contacted by the planetary rollers is formed with a coaxial passage, as a part of the axial passage 16, having a smaller effective area than the remaining part of the axial passage 16. The oil feed passage 15 through the drive shaft 3 has one end thereof communicating with an oil source T at the outside by way of a thin oil tube 17 so that the lubricating oil can be forcibly injected into the oil feed passages 15 and 16. An annular ring is provided between the thin oil tube 17 and the drive shaft 3 for sealing therebetween. The connection of the oil feed passages 15 and 16 between the drive shaft 3 and the driven shaft 7 is effected in an excellently hermetical state by means of a carbon seal 18 having a hollow cylindrical shape. Specifically, this carbon seal 18 is fitted through an elastic member 20 in a stepped recess 19 which is formed in the oil feed passage 15 of the drive shaft 3. Carbon seal 18 has its open end face arranged to face the end face of the driven shaft 7 and biased to abut against the driven shaft 7 by the elastic force of the aforementioned elastic member 20. Those oil feed passages 15 and 16 are respectively formed, at positions which correspond to the portions where the rolling bearings 2 and the friction transmission portion B1 are arranged, with small radial passages 21, which extend from the axial passages in the shafts toward the radially outward direction thereof so as to lubricate the respective portions. In the stationary casing C, there are opened in a communicating manner drain ports 22 which communicate with the recesses 12 and 12' and through which the lubricating oil left respectively in the recesses 12 and 12' after the lubrications of the aforementioned respective portions can be returned to the oil source T.

In the mechanism having the construction thus far described according to the first embodiment, if the drive shaft 3 is rotationally driven by the motor M through the V-belt 1 and pulley P, the planetary rollers 9 borne in the carrier 10 are held in rolling contact with the outer ring 13 and the driven shaft 7 as a sun roller so that they revolve round the driven shaft 7 together with the carrier 10 and rotate on their respective axes. As a result, the driven shaft 7 holding the drill 4 and the chuck 5 is efficiently accelerated by the planetary rollers 9 which are held in rolling contact with the driven shaft 7, while rotating on their axes, by the radial preloads applied. In the mechanism of the first embodiment, moreover, the driven shaft 7 is used as the output shaft, and the drive shaft 3, to which the carrier 10 bearing the planetary rollers 9 is connected, is used as the input shaft. As a result, the construction and arrangement can be more sufficiently simplified and reduced in size than the mechanism of the prior art. Furthermore, the planetary rollers 9 have their major portions sufficiently borne by the carrier 10 so that they can enjoy an effect that the unnecessary behaviors not only in the radial direction but also in the thrusting direction can be regulated to enhance the mechanical strength. The mechanism of the first embodiment is also characterized by the fact that the contact pressures between the planetary rollers 9 and the driven shaft 7 or the carrier 10 can be damped to improve durability and that the noises and vibrations can be remarkably reduced because of the rolling contacts established therebetween. In the mechanism of the present first embodiment, furthermore, the drive shaft 3 and the driven shaft 7 are respectively formed with the axial oil feed passages 15 and 16, through which the oil under pressure is introduced and forcibly injected from the center of the axis toward the radially outward direction to lubricate the roller bearings 2 and the friction transmission portion B1. The pressure distribution is effected in the oil feed passages 15 and 16 by the centrifugal force such that the pressure is lower in the vicinity of the center of the axis but higher in the vicinity of the passage walls so that all of the plural sliding frictional portions and rolling contact portions can be effectively and properly lubricated, whereby the formation of the lubricating oil films is ensured to prevent the wear, and the heated portions are cooled down to prevent seizure. In the mechanism of the first embodiment, furthermore, since the oil supply to the oil feed passages 15 and 16 is effected through the fixed thin oil tube 17, of which the circumferential speed is equal to or lower than about 1.2 m/sec., there is provided a practical effect that the sealing operation can be remarkably facilitated. Furthermore, since communication is established between the oil feed passages 15 and 16 by way of a coaxial passage having a small effective area, there can be attained another effect in that the performance of the mechanical seal can be enhanced.

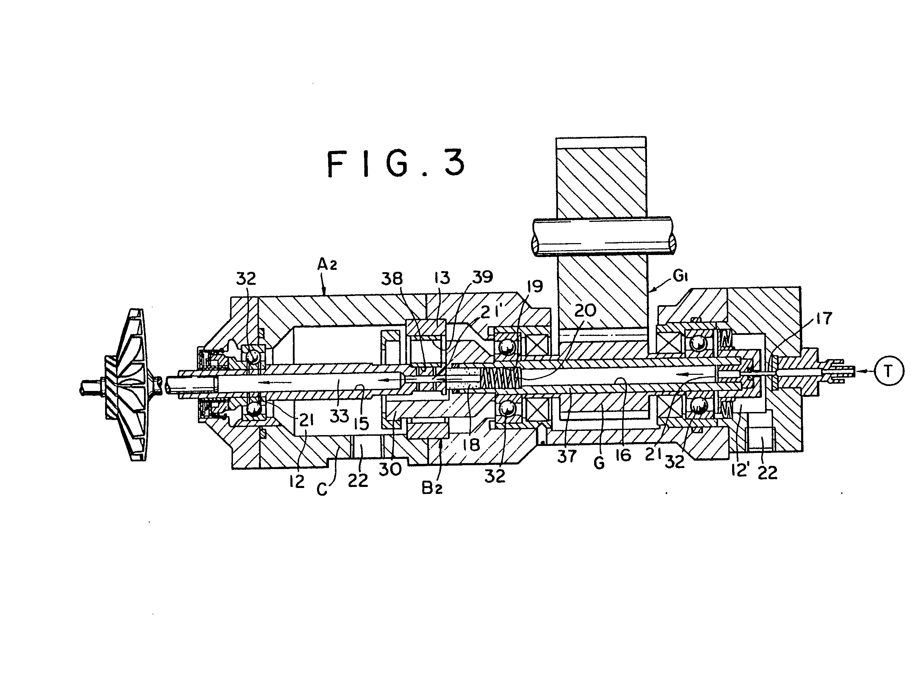

Next, a second embodiment of the present invention is directed to a planetary friction transmission mechanism A2 which acts as a reduction mechanism for transmitting the high speed rotations of a turbine or the like to the output shaft at a reduced speed, as shown in Fig. 3. Incidentally, the parts identical to those of the foregoing embodiment are indicated by identical reference numerals, and their explanations will be omitted here except for the differences therebetween.

The mechanism of the second embodiment is equipped with a driven shaft 33 which is made to rotationally communicate with the rotating shaft of the turbine as the rotational drive source and which has both its ends so supported by a rolling bearing 32 and a friction transmission portion B2 that they can rotate relative to the stationary casing C. There is provided coaxially with that drive shaft 33 a driven shaft 37 which has its one end arranged to face the drive shaft 33 and which is provided with a gear G acting as the rotary member rotationally communicating with the output shaft of a supercharger (not shown) through a gear transmission mechanism G1. The driven shaft 37 is so supported in the other rolling bearing 32 that it can rotate relative to the aforementioned casing C. In contact with the drive shaft 33, there are equidistantly arranged four elastic planetary rollers 39 which are fitted in an annular groove 38 formed in the drive shaft 33 so that they can revolve round the drive shaft 33. Those elastic planetary rollers 39 are made of metal, are formed of a hollow cylindrical shape and have their outer circumferences so borne in the pocketing faces (not shown) of a carrier 30 that they can revolve together with the carrier 30 round the drive shaft 33. Moreover, those planetary rollers 39 are so arranged that they are preloaded in the radial directions. Furthermore the carrier 30 has its one end connected to the aforementioned driven shaft 37 so that it can rotate together therewith. As a result, the rotations of the drive shaft 33 are transmitted to the planetary rollers 39 so that these rollers 39 can revolve together with the carrier 30 round the drive shaft 33 while rotating on their respective axes.

In the mechanism of the second embodiment, all those planetary rollers 39, carrier 30, drive shaft 33 and outer ring 13 are so arranged as to effect the friction transmission thereby to construct together the friction transmission portion B2. That portion of the drive shaft 33 contacted by the planetary rollers 39 acts as a sun roller.

In the mechanism having the construction thus far described according to the second embodiment, if the drive shaft 33 is rotationally driven by the rotating shaft of the turbine, the planetary rollers 39 borne in the carrier 30 are held in rolling contact between the outer ring 13 and the drive shaft 33 as a sun roller so that they can revolve together with the carrier 30 round the drive shaft 33 while rotating on their respective axes. As a result, the driven shaft 37 equipped with the gear G is efficiently rotated at a reduced speed through the carrier 30 by the planetary rollers 39 which are radially preloaded into rolling contact with the drive shaft 33 so that they revolve round the drive shaft 33. Moreover, the mechanism of the second embodiment can enjoy an effect in that the high speed rotations of the turbine can be transmitted at a properly reduced speed to the output shaft in addition to the effects substantially similar to those of the foregoing embodiment.

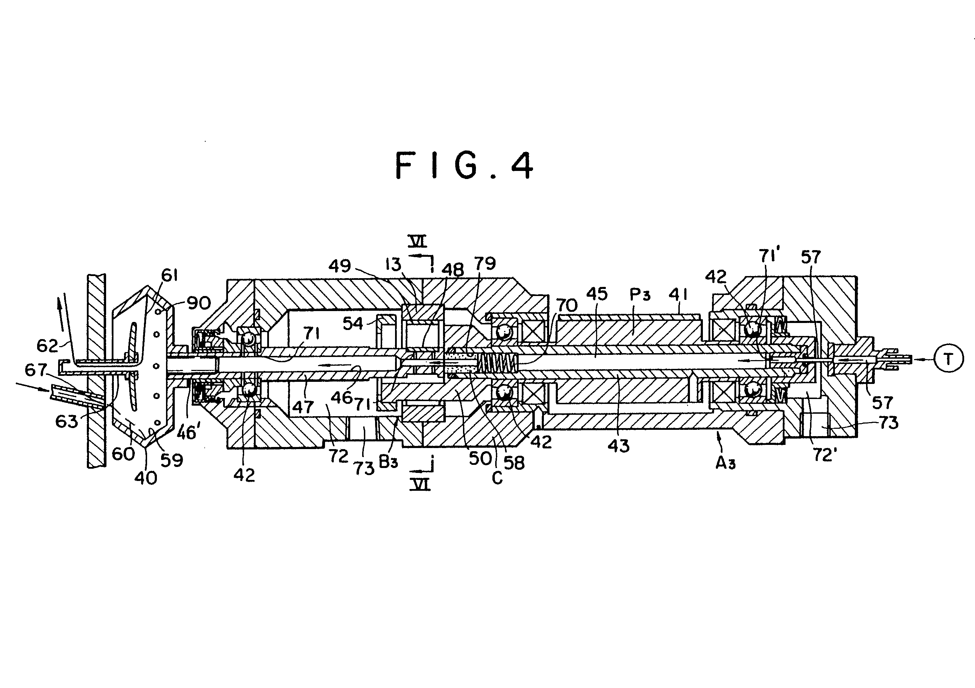

Next, the mechanism according to a third embodiment of the present invention is directed, as shown in Figs. 4 to 6, to a planetary friction transmission mechanism A3 which is used with a rotor type open end fine spinning machine for rotating such a spinning rotor at a high speed as is made operative to twist a bundle of fibers into a yarn. The parts identical to those of the foregoing embodiments are indicated by identical reference numerals, and their explanations will be omitted here except the differences inbetween.

The mechanism of the third embodiment is equipped with a drive shaft 43 which has rotational communication with a motor (not shown) as the rotational drive source through a flat belt 41 and a pulley P3 and which has both its ends so supported through a roller bearing 42 that it can rotate relative to the stationary casing C. There is provided coaxially with that drive shaft 43, a driven shaft 47 which has its one end coaxially arranged to face the drive shaft 43 and its other end carrying a rotor holder 46' holding a spinning rotor 40 acting as a hollow rotary member and which is so supported through another rolling bearing 42 that it can rotate relative to the aforementioned stationary casing C. In contact with the driven shaft 47, there are equidistantly arranged four planetary rollers 49 which are fitted in an annular groove 48 formed in the driven shaft 47 so that they can revolve round that shaft 47. Those planetary rollers 49 have their outer circumferences borne in the pocketing faces 51 of a carrier 50 so that they can revolve together with the carrier 50 around the driven shaft 47. The planetary rollers 49 are so arranged that they are preloaded in the radial directions. Moreover, the carrier 50 has one end thereof connected in an integrally rotatable manner to the aforementioned drive shaft 43 so that the rotations of the drive shaft 43 are transmitted to the carrier 50, whereby the planetary rollers 49 can revolve round the driven shaft 47 while rotating on their respective axes. In the recess 12 of the stationary casing C, there is integrally fixed the outer ring 13 which internally contacts with such portions of the planetary rollers 49 as protrude from the pocketing faces 51 of the carrier 50. To the other end of the carrier 50, moreover, there is integrally fixed a carrier ring 54 which acts upon the centrifugal forces of the aforementioned planetary rollers 49 and the carrier 50. In the embodiment of the present third embodiment, all the planetary rollers 49, carrier 50, driven shaft 47 and the outer ring 13 are so arranged as to effect the friction transmission thereby to construct a friction transmission portion B3. That portion of the driven shaft 47 contacted by the planetary rollers 49 acts as a sun roller.

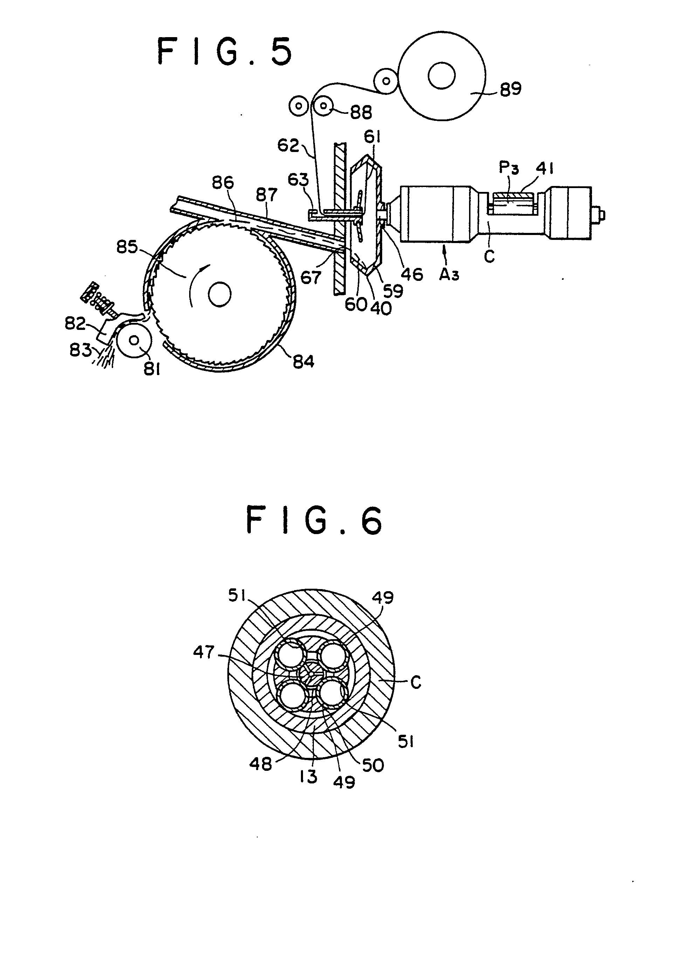

In the aforementioned spinning rotor 40, as shown in Figs. 4 and 5, there is opened a fiber feed passage 67 which has communication with a fiber supply source (not shown) thereby to feed fibers 60. On the center axis of rotation of said spinning rotor 40, moreover, there is arranged a fixed guide tube 63 which is made operative to guide a yarn 62 (i.e. a twisted bundle of fibers 61) to the outside. The fibers to be introduced into the spinning rotor 40, which is rotated at a high speed together with the driven shaft 47 through the firction transmission portion B3 by the action of the aforementioned drive shaft 43, are collected in the maximum internal diameter portion 59 of the spinning rotor 40. The fibers 60 thus collected are partially joined to the trailing end of a seed yarn, which has already been formed, and are drawn through the guide tube 63 thereby to withdraw the aforementioned collected bundle of fibers. At the same time, the withdrawn bundle of fibers 61 are then twisted by the high speed rotations of the spinning rotor 40. Moreover, the drive shaft 43 and the driven shaft 47 are respectively formed with axial bores to provides the oil feed passages 45 and 46. That portion of the driven shaft 47 contacted by the planetary rollers 49 is formed with a coaxial passage, as a part of the axial passage 46, having a smaller effective area than the remaining part of the axial passage 46. The oil passage 45 at the side of the drive shaft 43 has its one end communicating with the external oil source T by way of a thin oil tube 57 so that it can be forced to inject the lubricating oil into the oil feed passages 45 and 46. An annular ring is provided between the thin oil tube 57 and the drive shaft 43 for sealing therebetween. The connection of the oil feed passages 45 and 46 between the drive shaft 43 and the driven shaft 47 is effected in an excellently hermetical manner by means of a carbon seal 58 having a hollow cylindrical shape. Specifically, the oil feed passage 45 of the drive shaft 43 is formed with a stepped recess 79, in which the carbon seal 58 is fitted through an elastic member 70. The open end face of that carbon seal 58 is arranged to face the end face of the driven shaft 47 so that it is brought into contact with the driven shaft 47 by the elastic force of the aforementioned elastic member 70. The oil feed passages 45 and 46 are respectively formed, at positions where the rolling bearing 42 and the friction transmission portion B3 are arranged, with small radial passages 71, which extend from the axial passages of the shafts toward the radially outward direction thereof so as to lubricate the respective portions. In the stationary casing C, there are opened in a communicating manner drain ports 73 which communicate with the recesses 72 and 72' and through which the lubricating oil left respectively in the recesses 72 and 72' after the lubrications of the aforementioned respective portions can be returned to the oil source T.

In the mechanism having the construction thus far described according to the third embodiment, if the drive shaft 43 is rotationally driven by the motor through the flat belt 41 and the pulley P3, the planetary rollers 49 borne in the carrier 50 are held in rolling contact with the outer ring 13 and the driven shaft 47 as a sun roller so that they revolve round the driven shaft 47 together with the carrier 50 and on their respective axes. As a result, the driven shaft 47 holding the spinning rotor 40 is efficiently accelerated by the planetary rollers 49 which are held in rolling contact with the driven shaft 47, while rotating on their axes, by the radial preloads applied. In the mechanism of the third embodiment, furthermore, silvers 83 fed by a feed roller 81 and a pressure member 82 are opened at an opening mechanism 84 by the action of a combing roller 85. The fibers 86 thus opened are fed through the fiber feed passage 67 of a feed tube 87 to the spinning rotor 40 which is rotating at a high speed (equal to or higher than 50,000 r.p.m.). After that, the fibers 86 are sucked by the vacuum, which is induced by the rotations of the spinning rotor 40 (for example, by forming the bottom of the spinning rotor with evacuation holes 90 through which the air is evacuated by the rotations of the spinning rotor 40) and are carried by the swirling air flow until they are pressed against and collected on the inner wall in the vicinity of the maximum internal diameter portion 59 of the spinning rotor 40 thereby to form the bundle of fibers 61. If the seed yarn is joined to a portion of that fiber bundle 61 and is drawn at a far slower speed (e.g., 50 m/min.) than the circumferential speed of the inner wall of the spinning rotor 40, the fiber bundle 61 is twisted once for each rotation of the spinning rotor 40, as soon as it leaves the inner wall, thereby to form the yarn 62. This yarn 62 is taken up through take-up rollers 88 upon a cheese 89. For example, if the spinning rotor 40 is rotated at 60,000 r.p.m. and if the yarn is drawn at a speed of 60 m/min., the yarn is twisted once for 1 mm, i.e., at 25.4 t.p.i. In the planetary friction transmission mechanism of the third embodiment for the rotor type open end fine spinning machine, moreover, the planetary rollers 49 are fitted between the driven shaft 47 and the carrier 50 integrally and rotationally communicating with the drive shaft 43 so that the rotational drive from the drive shaft 43 at a lower speed is accelerated by the frictional rotations of the planetary rollers 49 thereby to stably, smoothly and efficiently rotate the driven shaft 47, which carries the spinning rotor 40, at a high speed. Here the driven shaft 47 is used as the out-shaft and the drive shaft 43 to which the carrier 50 is connected is used as the input shaft. Since the mechanical strength is thus enhanced to a sufficient level, the mechanism can be far more excellent in practice than the spinning rotor rotating mechanism of the prior art for the rotor type open end fine spinning machine. The mechanism of the present embodiment can enjoy practically excellent effects that the rotations are effected at a far higher speed, that the contacting pressure between the planetary rollers 49 and the driven shaft 47 or the carrier 50 are dampened to improve the durability and that the noises and vibrations can be remarkably reduced.

In the planetary friction transmission mechanism of the third embodiment for the rotor type open end fine spinning machine, furthermore, the drive shaft 43 may be rotated at a relatively low speed because the driven shaft 47 is accelerated by the frictional rotations of the planetary rollers 49. Even with the load upon the rotations due to the weight of the spinning rotor 40 and the pneumatic resistance, the practice can be sufficed. And, the spinning rotor 40 can be rotated at a high speed even if the speed of the belt is low. The tension upon the belt may be at a low value, and the durability of the belt itself can be improved while suppressing the generation of the vibrations of the belt. At the same time, since the planetary friction portion of the mechanism of the present invention is smaller in diameter than a spinning rotor, the rotor type open end fine spinning machine provided with this mechanism will not be enlarged in diameter, as compared with the conventional mechanism having a spinning rotor of the same diameter but using only the rolling bearings and not the friction transmission portion. Therefore, a plurality of spinning rotor rotating mechanisms can be sufficiently arranged at a narrowed spacing when they are juxtaposed to one another. Thus, the mechanism of the present embodiment can enjoy a practically excellent effect that the productivity of the fine spinning operation can be far more enhanced than the prior art. Furthermore, the planetary friction transmission mechanism of the present third embodiment for the rotor type open end fine spinning machine enables its oil feed mechanism to make more effective use of the space than the spinning rotor rotating mechanism of the prior art. Namely, the inner spaces of the drive shaft 43 and the driven shaft 47 are respectively used as the axial oil feed passages 45 and 46 into which the lubricating oil is introduced. The oil is then forcibly fed from the center of the axis toward the radially outward direction to lubricate the respective rolling bearings 42 of the drive shaft 43 and the driven shaft 47 and the friction transmission portion B3. Thanks to the rotational centrifugal force, all the sliding frictional portions existing in plural are effectively and properly lubricated. There can be attained other effects such that the formation of the lubricating oil films can be ensured to prevent wear and that the heated sliding frictional portions can be cooled down to prevent seizure. In addition, the effects substantially identical to those of the foregoing respective embodiments can be enjoyed.

The mechanism according to the present invention should not be limited to the aforementioned embodiments but can take other various modes. For example, the elastic planetary rollers should not be limited to those thus far described, i.e. those made of metal into the hollow cylindrical shape but may be made of a high-molecular material such as plastics into a solid or hollow cylindrical shape if the mechanism requires a relatively low load and a high speed rotation. Moreover, the carrier may be made of a similar material with the resultant effects substantially similar to the aforementioned ones.

**Claims**

1. A planetary friction transmission mechanism comprising:
    a casing (C);

a first shaft (3, 37, 43) rotatably supported in said casing and communicating with a rotation drive source;

a second shaft (7, 33, 47) rotatably supported in said casing coaxially with said first shaft and having its one end arranged to face said first shaft;

an outer ring (13) fixedly secured to said casing;

a plurality of elastic planetary rollers (9, 39, 49) disposed in contact with an inner wall of said outer ring;

a bearing retainer (10, 30, 50) carrying said planetary rollers, said bearing retainer being integrally connected to said first shaft;

a sun roller integrally connected to said second shaft and disposed in contact with said planetary rollers (9, 39, 49), whereby said planetary rollers and said bearing retainer (10, 30, 50) revolve around said sun roller and said sun roller acts as a friction transmission portion (B1, B2, B3) with said outer ring and said planetary rollers; and said first and said second shaft,

being formed with axial passages (15, 16; 45, 46) which are made to communicate with each other and with an external oil source (T), for introducing the lubricating oil therethrough and for forcibly feeding the oil from said axial passages toward the radially outward direction thereof to lubricate said friction transmission portion,

characterized in that said first shaft (3, 37, 43) is provided with an axial through hole (15, 16, 45) and that the lubricating oil is introduced from the external oil source (T) into said axial through hole at an axial end thereof.

2. A planetary friction transmission mechanism according to claim 1, wherein

a rotary member held by said second shaft (7) is a chuck (5) held by a chuck holder (6) and a tool (4) held by said chuck.

3. A planetary friction transmission mechanism according to claim 1, wherein

said second shaft (33) is connected to a rotating shaft of a turbine, operating as a rotation drive source.

4. A planetary friction transmission mechanism according to claim 3, wherein

a rotary member held by said first shaft (37) is a gear (G) connected to an output shaft of a supercharger through a gear transmission mechanism (G1).

5. A planetary friction transmission mechanism according to claim 1, wherein

said first shaft (43) is connected to a rotation drive source through a belt (41) and pulley (P3),

a rotary member held by said driven shaft (47) is a spinning rotor (40) for a rotor type open end fine spinning machine, to which a fiber feed passage (67) communicated with a fiber supply source is opened for feeding fibers and in which a guide tube (63) is disposed on the center axis of rotation of said spinning rotor for leading a yarn to the outside.

6. A planetary friction transmission mechanism according to any of the preceding claims, wherein said portion of said second shaft (47) contacted by said planetary rollers is formed with a coaxial passage, as a part of said axial passage (46), having a smaller effective area than the remaining part of said axial passage, said coaxial passage being formed with radial passages (71) extending therefrom radially outwardly, thereby effectively lubricating said friction transmission portion.

7. A planetary friction transmission mechanism according to any of the preceding claims, wherein said first shaft (3, 37, 43) has a carbon seal (18, 58) of a hollow cylindrical shape fitted and inserted in said axial passage (15, 16, 45) thereof through an elastic member (20, 70), an open end face of said carbon seal being arranged to abut an end face of said second shaft (7, 33, 47) by the elastic force of said elastic member,

thereby hermetically connecting said axial passages (15/16, 16/33, 45/46').

8. A planetary friction transmission mechanism according to any of the preceding claims, wherein

said axial passage (15, 16; 45) of said first shaft (3, 37, 43) is made to communicate with said external oil source (T) through a thin oil tube (17, 57), an annular ring being provided between said thin oil tube and said first shaft,

thereby forcibly injecting lubricating oil into said axial passages (15/16; 16/33, 45/46').

9. A planetary friction transmission mechanism according to any of the preceding claims, wherein said bearing retainer (10, 30, 50) has one end thereof provided with a carrier ring (14, 54) for holding said bearing retainer against centrifugal forces exerted thereon.

**Revendications**

1. Un mécanisme de transmission planétaire à friction comprenant:

un carter (C);

un premier arbre (3, 37, 44) supporté de façon tournante dans le carter et relié à une source de mouvement de rotation;

un second arbre (7, 33, 47) supporté de façon tournante dans le carter, en position coaxiale par rapport au premier arbre, et dont la première extrémité est disposée face au premier arbre;

une bague extérieure (13) fixée fermement au carter;

un ensemble de galets satellites élastiques (9, 39, 49) disposés en contact avec une paroi intérieure de la bague extérieure;

un élément de retenue de palier (10, 30, 50) portant les galets satellites, cet élément de retenue de palier étant accouplé au premier arbre de façon à ne former qu'une pièce avec celui-ci;

un galet planétaire accouplé au second arbre de façon à ne former qu'une pièce avec celui-ci et disposé en contact avec les galets satellites (9, 39, 49), grâce à quoi le galet satellite et l'élément de retenue de palier (10, 30, 50) tournent autour du galet planétaire, et ce galet planétaire se comporte comme un organe de transmission à friction (B1, B2, B3) avec la bague extérieure et les galets satellites; et les premier et second arbres comportant des passages axiaux (15, 16; 45, 46) qui sont formés de façon à communiquer entre eux et avec une source d'huile externe (T), pour introduire l'huile de lubrification dans ces passages, et pour la faire passer de force de ces passages axiaux vers l'extérieur de ceux-ci, en direction radiale, afin de lubrifier l'organe de transmission à friction,

caractérisé en ce que le premier arbre (3, 37, 43) comporte un trou axial traversant (15, 16, 45) et en ce que l'huile de lubrification est introduite dans ce trou axial traversant à partir de la source d'huile externe (T), au niveau d'une extrémité axiale de ce trou.

2. Un mécanisme de transmission planétaire à friction selon la revendication 1, dans lequel un organe tournant porté par le second arbre (7) consiste en un mandrin (5) porté par un porte-mandrin (6), et en un outil (4) porté par le mandrin.

3. Un mécanisme de transmission planétaire à friction selon la revendication 1, dans lequel le second arbre (33) est accouplé à un arbre tournant d'une turbine, constituant une source de mouvement de rotation.

4. Un mécanisme de transmission planétaire à friction selon la revendication 3, dans lequel un organe tournant porté par le premier arbre (37) consiste en un pignon (G) qui est accouplé à un arbre de sortie d'un compresseur par l'intermédiaire d'un engrenage de transmission (G1)..

5. Un mécanisme de transmission planétaire à friction selon la revendication 1, dans lequel

le premier arbre (43) est accouplé à une source de mouvement de rotation par l'intermédiaire d'une courroie (41) et d'une poulie (P3),

un organe tournant porté par l'arbre entraîné (47) consiste en un rotor de filage (40) pour une machine à filer de type fin, à rotor et à extrémité ouverte, dans lequel s'ouvre un passage d'entrée de fibres (67) communiquant avec une source d'alimentation en fibres, pour l'introduction de fibres, et dans lequel un tube de guidage (63) est disposé sur l'axe de rotation central du rotor de filage, pour diriger un fil vers l'extérieur.

6. Un mécanisme de transmission planétaire à friction selon l'une quelconque des revendications précédentes, dans lequel

la partie du second arbre (47) avec laquelle les galets satellites viennent en contact comporte un passage coaxial, faisant partie dudit passage axial (46), qui a une aire effective inférieure à celle de la partie restante de ce passage axial, ce passage coaxial comportant des passages radiaux (71) qui s'étendent vers l'extérieur en direction radiale à partir du passage coaxial, pour lubrifier ainsi efficacement la partie de transmission par friction.

7. Un mécanisme de transmission planétaire à friction selon l'une quelconque des revendications précédentes, dans lequel

le premier arbre (3, 37, 43) comporte un joint d'étanchéité en carbone (18, 58) ayant la forme d'un cylindre creux, ajusté et introduit dans son passage axial (15, 16, 45) par l'intermédiaire d'un élément élastique (20, 70), avec une face d'extrémité ouverte de ce joint d'étanchéité en carbone disposée de façon à porter contre une face d'extrémité du second arbre (7, 33, 47), sous l'effet de la force élastique de l'élément élastique, pour accoupler ainsi hermétiquement les passages axiaux (15/16, 16/33, 45/46').

8. Un mécanisme de transmission planétaire à friction selon l'une quelconque des revendications précédentes, dans lequel

le passage axial (15, 16; 45) du premier arbre (3, 37, 43) est formé de façon à communiquer avec la source d'huile externe (T) par un tube d'huile étroit (17, 57), avec une bague disposée entre le tube d'huile étroit et le premier arbre,

pour ainsi injecter de force de l'huile de lubrification dans les passages axiaux (15/16; 16/33, 45/46').

9. Un mécanisme de transmission planétaire à friction selon l'une quelconque des revendications précédentes, dans lequel une extrémité de l'élément de retenue de palier (10, 30, 50) est équipé d'une bague de support (14, 50) destinée à maintenir l'élément de retenue de palier contre l'action de forces centrifuges qui s'exercent sur lui.

**Patentansprüche**

1. Reibungsplanetengetriebe mit
einem Gehäuse (C),
einer ersten Welle (3, 37, 43), welche im Gehäuse drehbar gelagert und mit einem Drehantrieb verbunden ist,
einer zweiten Welle (7, 33, 47), welche im Gehäuse koaxial zur ersten Welle drehbar gelagert und mit ihrem einen Ende der ersten Welle zugewandt ist,
einem Außenring (13), welcher am Gehäuse befestigt ist,
mehreren elastischen Planetenrollen (9, 39, 49), welche eine Innenwandung des Außenringes berühren,
einem Lagerkäfig (10, 30, 50), welcher die Planetenrollen trägt und mit der ersten Welle fest verbunden ist, und
einer Sonnenrolle, welche mit der zweiten Welle fest verbunden ist und die Planetenrollen (9, 39, 49) berührt, so daß die Planetenrollen und der Lagerkäfig (10, 30, 50) um die Sonnenrolle herumlaufen und letztere mit dem Außenring und den Planetenrollen als Reibgetriebeteil (B1, B2, B3) wirkt, wobei
die erste Welle und die zweite Welle mit axialen Kanälen (15, 16; 45, 46) versehen sind, welche miteinander und mit einer äußeren Ölquelle (T) kommunizieren, um das Schmieröl durch dieselben hindurch einzuführen und das Öl von den axialen Kanälen radial nach außen zu drücken, um den Reibgetriebeteil zu schmieren,
dadurch gekennzeichnet, daß die erste Welle (3, 37, 43) mit einer axialen Durchgangsbohrung (15, 16, 45) versehen ist, und daß das Schmieröl von der äußeren Ölquelle (T) in die axiale Durchgangsbohrung an einem Ende derselben eingeführt wird.

2. Reibungsplanetengetriebe nach Anspruch 1, wobei die zweite Welle (7) ein Drehglied hält, bei welchem es sich um ein von einem Spannfutterhalter (6) gehaltenes Spannfutter (5) und ein von demselben gehaltenes Werkzeug (4) handelt.

3. Reibungsplanetengetriebe nach Anspruch 1, wobei die zweite Welle (33) mit einer rotierenden Welle einer Turbine verbunden ist, welche als Drehantrieb arbeitet.

4. Reibungsplanetengetriebe nach Anspruch 3, wobei die erste Welle (37) ein Drehglied hält, bei welchem es sich um ein Ritzel (G) handelt, das über ein Zahnradgetriebe (G1) mit der Ausgangswelle eines Vorverdichters verbunden ist.

5. Reibungsplanetengetriebe nach Anspruch 1, wobei die erste Welle (43) über einen Riemen (41) und eine Riemenscheibe (P3) mit einem Drehantrieb verbunden ist und die angetriebene Welle (47) ein Drehglied hält, bei welchem es sich um einen Spinnrotor (40) für eine Open-end-Feinspinnmaschine vom Rotortyp handelt, in welchen ein mit einer Faserspeisequelle kommunizierender Faserzufuhrkanal (67) zur Zufuhr von Fasern mündet und in welchem ein Führungsrohr (63) zur Ableitung eines Garns nach außen konzentrisch zur mittleren Drehachse des Spinnrotors angeordnet ist.

6. Reibungsplanetengetriebe nach einem der vorstehenden Ansprüche, wobei der sich in dem von den Planetenrollen berührten Abschnitt der zweiten Welle (47) koaxial erstreckende Abschnitt des axialen Kanals (46) derselben eine kleinere wirksame Querschnittsfläche als der restliche axiale Kanal (46) aufweist und sich von diesem koaxialen Kanalabschnitt Kanäle (71) radial nach außen erstrecken, um den Reibgetriebeteil wirksam zu schmieren.

7. Reibungsplanetengetriebe nach einem der vorstehenden Ansprüche, wobei in den axialen Kanal (15, 16, 45) der ersten Welle (3, 37, 43) eine hohlzylindrische Kohlenstoffdichtung (18, 58) über ein elastisches Glied (20, 70) eingesetzt ist, welche durch die Federkraft des elastischen Gliedes (20, 70) mit einer offenen Stirnfläche gegen die benachbarte Stirnfläche der zweiten Welle (7, 33, 47) gedrückt wird, um die axialen Kanäle (15/16, 16/33, 45/46') hermetisch zu verbinden.

8. Reibungsplanetengetriebe nach einem der vorstehenden Ansprüche, wobei der axiale Kanal (15, 16; 45) der ersten Welle (3, 37, 43) mit der äußeren Ölquelle (T) über ein dünnes Ölrohr (17, 57) kommuniziert und ein Ring zwischen dem dünnen Ölrohr und der ersten Welle vorgesehen ist, um Schmieröl in die axialen Kanäle (15/16; 16/33; 45/46') mit Kraft einzuspritzen.

9. Reibungsplanetengetriebe nach einem der vorstehenden Ansprüche, wobei der Lagerkäfig (10, 30, 50) an seinem einen Ende mit einem Trägerring (14, 54) zum Halten des Lagerkäfigs gegen darauf einwirkende Fliehkräfte versehen ist.

# FIG. I

# FIG.2

0 074 629

# FIG. 3

F I G . 4

0 074 629

# F I G. 5

# F I G. 6

4